# EUROPEAN PATENT APPLICATION

(11) **EP 3 539 829 A1**
(43) Date of publication of application: **18.09.2019**
(21) Application number: 18161371.2
(22) Date of filing: 13.03.2018
(51) Int. Cl.: B60R 1/08, B60R 1/078

(54) **DRIVING AUXILIARY MIRROR APPARATUS FOR ASSISTING VIEWING OF REAR VEHICLE**

(71) Applicant: Wang, Tsung-Ming, 600 Chiayi City (TW)
(72) Inventor: Wang, Tsung-Ming, 600 Chiayi City (TW)
(74) Representative: Horak, Michael

(57) **Abstract**

A driving auxiliary mirror apparatus (3) for assisting viewing of a rear vehicle of the present invention comprises a base (31) for securing onto a vehicle and an auxiliary mirror (32) attached onto the base (31). The auxiliary mirror (32) can be pivotally rotated to adjust the viewing projection position thereof in order to increase the scope of vision at the front and two sides of a rear vehicle driver. Therefore, the driving auxiliary mirror apparatus (3) is able to facilitate the rear vehicle driver to determine a distance away from the front vehicle installed with the driving auxiliary mirror apparatus (3) thereon. In addition, it is able to further reduce occurrence of collisions with the front vehicle installed with the driving auxiliary mirror apparatus (3) thereon during parking and driving and reduce collisions at two sides of the vehicle. Consequently, driving safety can be significantly improved.

## Description

### (a) Technical Field of the Invention

The present invention is related to a driving auxiliary mirror apparatus, in particular, to a driving auxiliary mirror apparatus for assisting viewing of a rear vehicle.

### (b) Description of the Prior Art

Automobiles have become one of the most common transportation tools and the traffic volumes on conventional roads are increasing constantly. Under the condition where the density and flow of traffic volume increase, the occurrence of traffic accidents also increases. In addition, among the traffic accidents, a great portion thereof is due to vehicle collisions caused by blind spots of drivers. Despite that cars are equipped with the standard rearview mirrors and the two left and right side mirrors, such mirrors can only provide limited scope of vision, which cannot effectively avoid the generation of blind spots. When pedestrians, objects or other vehicles enter into the vision blind spot of a driver, the driver is likely to be hindered from being aware of the presents of such people or objects, and their sudden appearance in the scope of vision of the driver may still be insufficient for the driver to react instantaneously with adequate stopping actions. As a result, vehicle collisions occur and the safety of lives of drivers, pedestrians and other road users are likely to be jeopardized

Accordingly, a lot of manufacturers have developed additional convex mirrors for attachment onto the side mirrors of vehicles or rearview mirrors of greater surface areas for the purpose of increasing the scope of vision. Nevertheless, such designs can only provide improvements on the scope of vision of the two sides and the rearview for drivers, which cannot improve the scope of vision at the front of vehicles. Consequently, during the time when the vehicle driven by the driver approaches another vehicle at the front, blind spot is likely to occur, which can hinder drivers from determining the distance between the head of the vehicle and the other vehicle at the front. In addition, although there are manufacturers adopt the method of installation of electronic camera equipment at the head of the vehicle or distance measurement and alarm device for alerting drivers about the distance with the vehicle at the front, such electronic equipment is expensive and is prone to damages due to moisture, which is not optimal to economic benefits, and there is a need for an improvement.

### SUMMARY OF THE INVENTION

In view of the above, a primary objective of the present invention is to provide a driving auxiliary mirror apparatus for assisting viewing of a rear vehicle such that it is able to effectively increase the scope of vision of a rear vehicle driver in order to allow the rear vehicle driver to maintain a safe driving distance with the vehicle at the front with the driving auxiliary mirror apparatus of the present invention installed therein. Therefore, vehicle collision accidents due to blind spots can be prevented, and driving safety can be increased.

To achieve the aforementioned objective, the present invention provides a driving auxiliary mirror apparatus for assisting viewing of a rear vehicle, comprising a base, and an auxiliary mirror pivotally attached onto the base; wherein the base comprises a positioning portion, an extension portion extended outward from the positioning portion and a locking slot formed on the extension portion; the auxiliary mirror comprises a housing, a curved wide-angle mirror secured onto the housing and at least one attachment member extended outward from the housing and configured to pivotally attached onto the locking slot for positioning thereof; and wherein a diameter of the locking slot is smaller than a diameter of the attachment member. Therefore, the assembly member and the locking slot can form a press-fit attachment with each other for firm securement thereof. During the use of the driving auxiliary mirror apparatus of the present invention, the driver can attach the positioning position onto the rear part of the vehicle, and the assembly member is pivotally attached onto the locking slot. Therefore, the driver can then pivotally rotate the driving auxiliary mirror apparatus in order to adjust the location and angle to be viewed by the curved wide-angle mirror. Consequently, a rear vehicle driver at the rear side of the vehicle installed with the driving auxiliary mirror apparatus of the present invention is able to determine the distance between his or her own vehicle head and the front vehicle with ease, which is advantageous to not only reduce the likelihood of vehicle collisions during parking and driving but also provide warning to rear vehicles to maintain safe distance during driving. Moreover, the driving auxiliary mirror apparatus can also effectively increase the scope of view at the two sides of the rear vehicle driver such that the occurrence of collision at two sides of the vehicle can be further reduced; consequently, the driving safety is greatly increased.

### BRIEF DESCRIPTION OF THE DRAWINGS

FIG 1 is a perspective assembly view of a first exemplary preferred embodiment of the driving auxiliary mirror apparatus of the present invention;
FIG. 2 is a side view of the first exemplary preferred embodiment of the driving auxiliary mirror apparatus of the present invention;

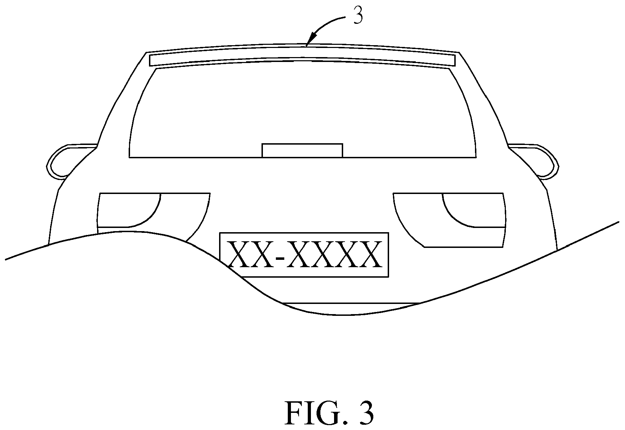

FIG. 3 shows a state of use of the first exemplary preferred embodiment of the driving auxiliary mirror apparatus of the present invention;
FIG. 4 shows another state of use of the first exemplary preferred embodiment of the driving auxiliary mirror apparatus of the present invention; and
FIG. 5 is a schematic view of the mirror projection viewing of the first exemplary preferred embodiment of the driving auxiliary mirror apparatus of the present invention.

### DETAILED DESCRIPTION OF THE PREFERRED EMBODIMENTS

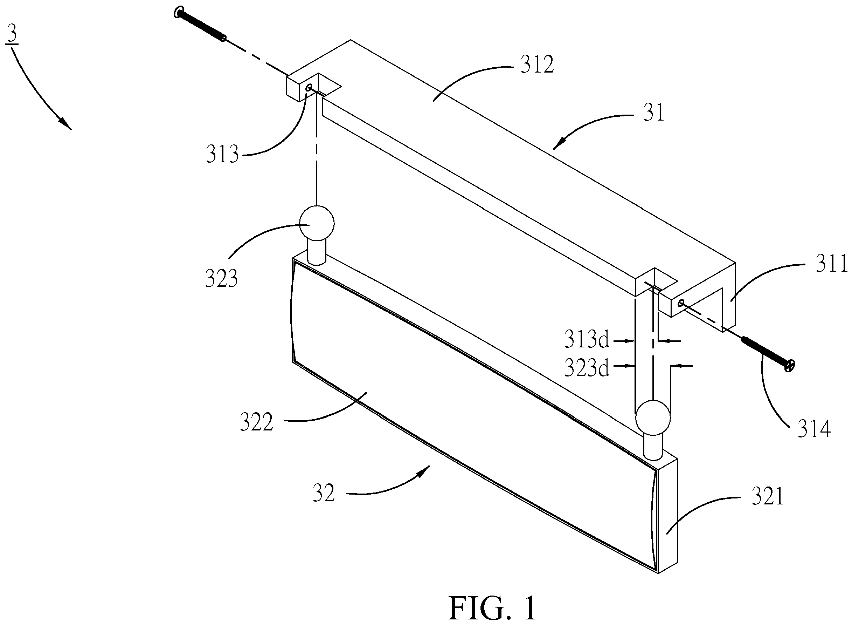

As shown in FIG. 1, according to a first exemplary preferred embodiment of the present invention, a driving auxiliary mirror apparatus 3 for assisting viewing of a rear vehicle comprises a base 31, an auxiliary mirror 32 pivotally attached onto the base 31; wherein the base 31 comprises a positioning portion 311, an extension portion 312 extended outward from the positioning portion 311 and a locking slot 313 formed on the extension portion 312; the auxiliary mirror 32 comprises a housing 321, a curved wide-angle mirror 322 secured onto the housing 321 and at least one attachment member 323 extended outward from the housing 321 and configured to pivotally attached onto the locking slot 313 for positioning thereof. In addition, a diameter 313d of the locking slot 313 is smaller than a diameter 323d of the attachment member 323 in order to allow the attachment member 323 to be firmly secured inside the locking slot 313. Furthermore, in this exemplary embodiment, the attachment member 323 is of a ball-shape design in order to allow the attachment member 323 to be rotated freely at any angles. Moreover, a fastening member 314 is arranged between the attachment member 323 and the locking slot 313 in order to allow the fastening member 313 to penetrate through the locking slot 313 and to abut against the attachment member 323, thereby further enhancing a locking stability between the attachment member 323 and the locking slot 313.

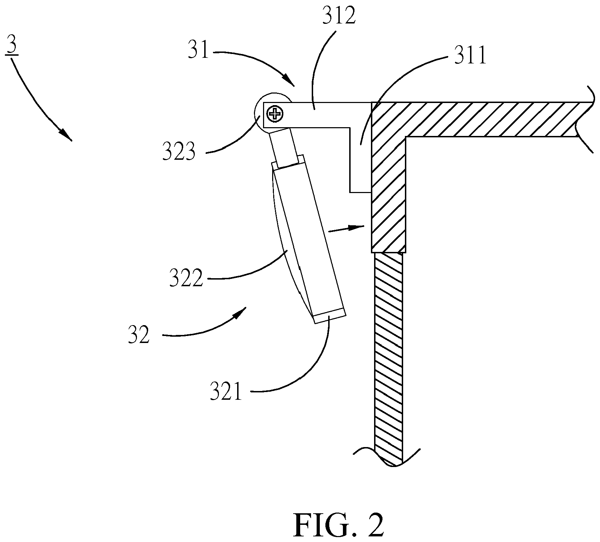

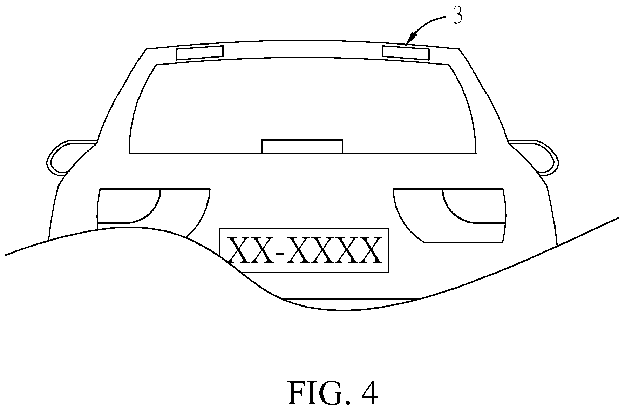

According to the above, the driving auxiliary mirror apparatus 3 for assisting viewing of a rear vehicle can be configured as a whole plate for installation at the rear side of a vehicle, as shown in FIG. 4. Alternatively, it can also be configured as a multiple mirrors for attachment at two sides of rear portion of a vehicle, as shown in FIG. 2. During the installation operation, the driver only needs to attach the positioning portion 411 onto the rear portion of the driving vehicle, such as at the rear window adjacent to the roof of the vehicle; therefore, the installation method thereof is easy and is able to prevent any damages due to moisture as well as satisfying the economic benefits. Next, the driver can then install the attachment member 323 to be pivotally attached onto the locking slot 313; therefore, the driver is able to adjust the angle of the mirror projection position of the curved wide-angle mirror 322 depending upon the actual condition of use. Since the viewing angle of the rear vehicle driver generally falls at the middle section position of the rear window area of the front vehicle, the driver can install the curved wide-angle mirror 322 to face toward the direction of the positioning portion 311. Consequently, it is able to prevent direct sunlight from projecting onto the curved wide-angle mirror 322 that may cause discomfort of the rear vehicle driver. In addition, it is able to allow the use of the curved wide-angle mirror 322 to facilitate the increase of the scope of vision projected from the mirror in order to effectively project the viewing of the vehicle head of the rear vehicle; therefore, the rear vehicle driver can be aware of the distance between his or her own vehicle head and the front vehicle.

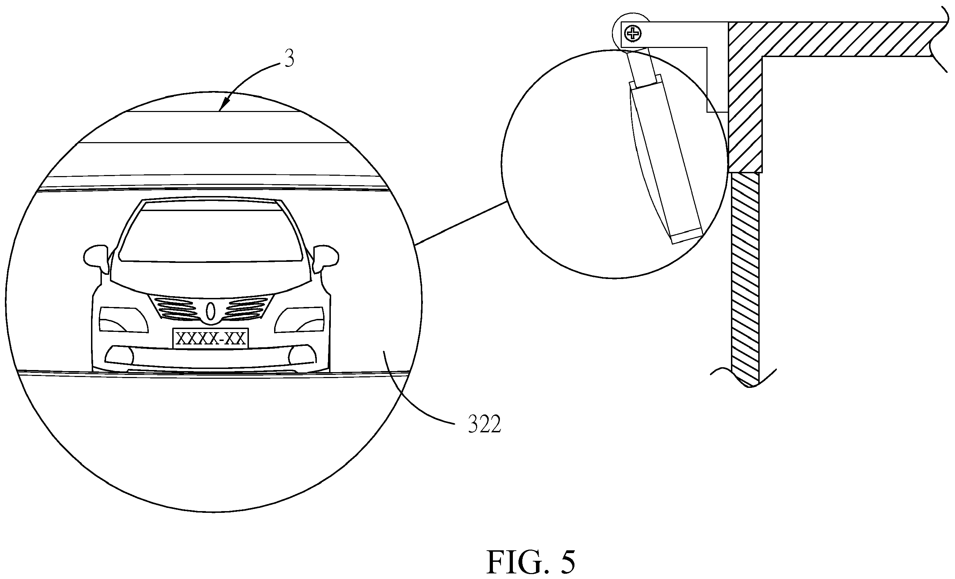

As shown in FIG. 5, when a driver is driving a vehicle installed with the driving auxiliary mirror apparatus of the present invention, the curved wide-angle mirror 322 is able to effectively increase the scope of front viewing of a rear vehicle driver at the rear in order to allow the rear vehicle driver to easily determine the distance between his or her own vehicle head and the front vehicle installed with the driving auxiliary mirror apparatus of the present invention; therefore, a safe driving distance can be maintained. Furthermore, during the occurrence of unexpected incidents, the rear vehicle driver can also have sufficient reaction time to adopt necessary actions such that the occurrence of vehicle collision can be reduced. Moreover, the curved wide-angle mirror 322 can also effectively increase the scope of vision at two sides of the rear vehicle driver; therefore, the rear vehicle driver can be aware of the pedestrians or vehicles etc. at the two sides of his or her own vehicles by viewing the curved wide-angle mirror 322 installed on the front vehicle. As a result, the occurrence of collisions at two sides of vehicles can be further reduced, and the driving safety can be significantly improved. In addition, after the driver parks the driver installed with the driving auxiliary mirror apparatus of the present invention, a rear vehicle driver can also use the curved wide-angle mirror 32 to effectively determine the distance between the vehicle head and the front vehicle installed with the driving auxiliary mirror apparatus during the moving of his or her vehicle. Consequently, collisions with the front vehicle installed with the driving auxiliary mirror apparatus can be prevented during the moving of the vehicle at the rear of said front vehicle.

In vie w of the above, the driving auxiliary mirror apparatus for assisting viewing of a rear vehicle of the present invention is able to use the base thereof for firm securement onto a vehicle. In addition, the pivotal attachment between the auxiliary mirror and the base is able to allow the driver to adjust the projection viewing position of the curved wide-angle mirror; therefore, when a driver is driving a vehicle installed with the driving auxiliary mirror apparatus of the present invention on roads, a rear vehicle driver is able to use the driving auxiliary mirror apparatus of the present invention installed on the front vehicle to effectively increase the scope of vision at the front and the two sides in order to maintain a safe driving distance from the front vehicle installed with the driving auxiliary mirror apparatus of the present invention. Consequently, it is able to reduce the occurrence of collisions with the front vehicle during driving as well as to significant reduce the occurrence of collisions at two sides; thereby the driving safety is greatly improved.

## Claims

1. A driving auxiliary mirror apparatus (3) for assisting viewing of a rear vehicle, comprising:
a base (31); and
an auxiliary mirror (32) pivotally attached onto the base (31);
wherein the base (31) comprises a positioning portion (311), an extension portion (312) extended outward from the positioning portion (311) and a locking slot (313) formed on the extension portion (312); the auxiliary mirror (32) comprises a housing (321), a curved wide-angle mirror (322) secured onto the housing (321) and at least one attachment member (323) extended outward from the housing (321) and configured to pivotally attached onto the locking slot (313) for positioning thereof; and wherein a diameter (313d) of the locking slot (313) is smaller than a diameter (323d) of the attachment member (323).

2. The driving auxiliary mirror apparatus (3) for assisting viewing of a rear vehicle according to claim 1, wherein the attachment member (323) is of a ball-shape design in order to allow the attachment member (323) to be rotated freely at any angles.

3. The driving auxiliary mirror apparatus for assisting viewing of a rear vehicle according to claim 1, wherein a fastening member (314) is arranged between the attachment member (323) and the locking slot (313) in order to enhance a locking stability therebetween.
